(19) Europäisches Patentamt
European Patent Office
Office européen des brevets

(11) **EP 2 234 856 B1**

(12) **EUROPÄISCHE PATENTSCHRIFT**

(45) Veröffentlichungstag und Bekanntmachung des Hinweises auf die Patenterteilung:
**10.04.2013  Patentblatt 2013/15**

(51) Int Cl.:
**B60T 17/02** (2006.01)   **F04B 49/16** (2006.01)

(21) Anmeldenummer: **09704061.2**

(22) Anmeldetag: **13.01.2009**

(86) Internationale Anmeldenummer:
**PCT/EP2009/000138**

(87) Internationale Veröffentlichungsnummer:
**WO 2009/092528 (30.07.2009 Gazette 2009/31)**

(54) **KOMPRESSOR UND VERFAHREN ZUR STEUERUNG EINES KOMPRESSORS ZUR DRUCKLUFTVERSORGUNG EINES NUTZFAHRZEUGS**

COMPRESSOR AND METHOD FOR CONTROLLING A COMPRESSOR FOR SUPPLYING COMPRESSED AIR TO A UTILITY VEHICLE

COMPRESSEUR ET PROCÉDÉ POUR COMMANDER UN COMPRESSEUR SERVANT À ALIMENTER UN VÉHICULE UTILITAIRE EN AIR COMPRIMÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **22.01.2008   DE 102008005429**

(43) Veröffentlichungstag der Anmeldung:
**06.10.2010   Patentblatt 2010/40**

(73) Patentinhaber: **KNORR-BREMSE Systeme für Nutzfahrzeuge GmbH**
**80809 München (DE)**

(72) Erfinder: **MELLAR, Jörg**
**85652 Pliening (DE)**

(74) Vertreter: **Schönmann, Kurt**
**Knorr-Bremse,**
**Moosacher Strasse 80**
**80809 München (DE)**

(56) Entgegenhaltungen:
**EP-A- 0 119 505     EP-A- 0 254 524**
**EP-A- 1 442 903     GB-A- 650 060**

**Beschreibung**

Die Erfindung betrifft einen Kompressor zur Druckluftversorgung eines Nutzfahrzeugs mit einem Antriebsmotor, wobei der Kompressor einen Kolbenraum, einen Schadraum sowie eine Ventileinrichtung zum Schalten des Schadraumes umfasst.

Die Erfindung betrifft weiterhin ein Verfahren zur Steuerung eines Kompressors zur Druckluftversorgung eines Nutzfahrzeugs mit einem Antriebsmotor, wobei der Kompressor einen Kolbenraum, einen Schadraum sowie eine Ventileinrichtung zum Schalten des Schadraumes umfasst.

Um den Druckluftbedarf von Teilsystemen moderner Nutzfahrzeuge befriedigen zu können, werden die einer Druckluftversorgungseinrichtung zugehörigen Kompressoren mit einem sinkenden Übersetzungsverhältnis ausgestattet. Das Übersetzungsverhältnis $i$ zwischen der Drehzahl der Antriebswelle $n_{Antrieb}$, die mit der Motordrehzahl identisch ist, und der Drehzahl der Abtriebswelle $n_{Abtrieb}$, die mit der Kompressordrehzahl identisch ist, ist dabei als

$$i = \frac{n_{Antrieb}}{n_{Abtrieb}}$$

definiert und wird möglichst klein gewählt.

Dies geschieht da insbesondere bei geringen Motordrehzahlen oft ein erhöhter Luftbedarf des Nutzfahrzeugs vorliegt. Beispielsweise ist dies der Fall bei einem Containerwechselbetrieb und bei einem Bus der eine Haltestelle anfährt. Letzterer muss dort anhalten, die Türen öffnen, die Luftfederung zunächst entlüften, um ein komfortables Aussteigen bei niedrigem Bodenniveau des Busses zu ermöglichen, die Türen wieder schießen und anschießend die Luftfederung wieder vor dem Anfahren belüften. Alle genannten Vorgänge verbrauchen viel Luft, die bei geringer Motordrehzahl aufgebracht werden muss.

Durch das sinkende Übersetzungsverhältnis wird jedoch die geförderte Luftmenge nicht nur bei niedrigen, sondern auch bei hohen Motordrehzahlen stark erhöht, wodurch extreme mechanische und thermische Belastungen des Kompressors entstehen können. Dies gilt insbesondere, da die Nenndrehzahl des Antriebsmotors von beispielsweise 2000 Umdrehungen pro Minute um mehrere Hundert Umdrehungen bis zu einer Bremsdrehzahl von beispielsweise 2400 Umdrehungen pro Minute im Falle einer Motorbremsung deutlich überschritten werden kann. Problematisch hierbei ist insbesondere, dass bei Durchführung einer Motorbremsung eine komplette Abschaltung des Kompressors zur Materialschonung nicht erwünscht ist, da eventuell Luft zum Abbremsen des Fahrzeugs durch die Betriebsbremse benötigt wird. Dieser Luftverbrauch ist sogar anzunehmen, da das Nutzfahrzeug bereits durch die Motorbremse abgebremst werden soll.

Aus der EP 0 119 505 A1 ist ein Kompressor mit zuschaltbarem Schadraum bekannt, der bei Zuschalten des Schadraums zu einem Druckraum des Kompressors die Förderung von Druckluft einstellt.

Auch aus der EP 0 254 524 A ist ein entsprechender Kompressor bekannt, der über ein zuschaltbares Schadraumvolumen verfügt und der die Druckluftförderung bei Zuschaltung des Schadraumvolumens einstellt.

Auch gemäß der EP 1 442 903 A1 ist es bekannt, die Förderleistung eines Kompressors durch einen zuschaltbaren Totraum anzupassen.

Der Erfindung liegt die Aufgabe zugrunde, einen Kompressor bereitzustellen, der bereits bei kleinen Motordrehzahlen eine große Luftmenge fördert, wobei gleichzeitig bei hohen Motordrehzahlen, die an dem Kompressor auftretenden Belastungen gesenkt werden.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die Erfindung baut auf dem gattungsgemäßen Kompressor dadurch auf, dass der Kompressor über ein Getriebe mit einem Übersetzungsverhältnis kleiner als Eins von dem Antriebsmotor angetrieben ist, und dass die Ventileinrichtung in der Weise ausgebildet ist, dass, durch Zuschalten von Schadraum, der von dem Kompressor geförderte Luftstrom auf einen von Null verschiedenen Wert reduzierbar ist. Das Zuschalten von Schadraum verringert den von dem Kompressor während einer Kompressionsphase erreichbaren Komprimierungsgrad. Da die während der Komprimierung entstehende Wärme mit dem Komprimierungsgrad korreliert senkt die Reduzierung der maximalen Kompression auch die während eines Förderzyklus des Kompressors entstehende Wärme und somit die thermische Belastung des Kompressors. Weiterhin werden die mechanisch beanspruchten Teile des Kompressors, zum Beispiel die Kurbelwelle, der Kolben, das Pleuel, der Pleuelbolzen und das Kurbelwellenlager vor Überbeanspruchung bei hohen Drehzahlen und Drücken geschützt und auf diese Weise eine mechanische Verstärkung der Teile überflüssig. Typische Übersetzungsverhältnisse, bei der der Einsatz eines erfindungsgemäßen Kompressors besonders bevorzugt ist, liegen zwischen 0,4 und 0,7, wobei der erfindungsgemäße Kompressor jedoch auch bei anderen Übersetzungsverhältnissen einsetzbar ist.

Vorteilhafterweise kann dabei vorgesehen sein, dass die Ventileinrichtung mehrere einzeln schaltbare Ventile umfasst. Das Zuschalten von Schadraum erfolgt üblicherweise durch das Schalten einer Ventileinrichtung, die eine Verbindung zwischen dem Kolbenraum und dem Schadraum in Form eines definierten Ventilquerschnitts freigibt. Über diesen definierten Ventilquerschnitt atmet der Kompressor während der Komprimierungsphase Luft in den Schadraum. Neben dem Schadraumvolumen ist der Ventilquerschnitt der freigegebenen Verbindung von Bedeutung, da dieser den Strömungswiderstand für die Luft bestimmt. Mehrere einzeln schaltbare Ventile ermöglichen daher ein an die Drehzahl des Kompressors angepasstes Vergrößern des Ventilquerschnitts beziehungsweise ein Senken des Strömungswiderstandes.

Nützlicherweise kann weiterhin vorgesehen sein, dass der Schadraum mehrere separate Volumen umfasst, die von der Ventileinrichtung einzeln schaltbar sind. Das Zuschalten von weiterem Schadraumvolumen ermöglicht im Bedarfsfall eine weitere Absenkung der in dem Kompressor auftretenden Spitzendrücke und somit eine weitere Reduzierung der thermischen und mechanischen Belastung.

Alternativ kann vorgesehen sein, dass die Ventileinrichtung ein zumindest zweistufig schaltbares Ventil umfasst. Auch mit einem zumindest zweistufig schaltbaren Ventil kann der freigegebene Ventilquerschnitt zwischen Kolbenraum und Schadraum bedarfsgerecht angepasst werden, weshalb auf diese Weise ebenfalls die in dem Kompressor auftretenden Spitzendrücke stufbar reduzierbar sind.

Insbesondere kann vorgesehen sein, dass der von dem Kompressor geförderte Luftstrom durch Zuschalten von Schadraum auf Null reduzierbar ist. Ist der von der Ventileinrichtung freigebbare Ventilquerschnitt zwischen dem Kolbenraum und dem Schadraum genügend groß und gleichzeitig das Volumen des Schadraumes ausreichend, so ist der von dem Kompressor erreichbare Förderdruck unter den zur Förderung eines Luftstromes notwendigen Druck absenkbar. In diesem Zustand fördert der Kompressor keinen Luftstrom mehr und benötigt dementsprechend weniger Energie, da er weniger Arbeit verrichtet. Auf diese Weise lässt sich ein System zur Energieeinsparung realisieren.

Die Erfindung baut auf dem gattungsgemäßen Verfahren dadurch auf, dass der Kompressor über ein Getriebe mit einem Übersetzungsverhältnis kleiner als Eins von dem Antriebsmotor angetrieben wird, und dass, durch Zuschalten von Schadraum, der von dem Kompressor geförderte Luftstrom auf einen von Null verschiedenen Wert reduziert wird.

Auf diese Weise werden die Vorteile und Besonderheiten des erfindungsgemäßen Kompressors auch im Rahmen eines Verfahrens umgesetzt. Dies gilt auch für die nachfolgend angegebenen besonders bevorzugten Ausführungsformen des erfindungsgemäßen Verfahrens.

Dieses wird in nützlicher Weise dadurch weitergebildet, dass der geförderte Luftstrom durch Veränderung eines insgesamt offenen ventilquerschnitts der Ventileinrichtung zwischen dem Schadraum und dem Kolbenraum beeinflusst wird.

Weiterhin kann vorgesehen sein, dass der von dem Kompressor geförderte Luftstrom durch Zuschalten von Schadraum auf Null reduziert wird.

Nützlicherweise kann vorgesehen sein, dass zumindest eine Bedingung zum Schalten von Schadraum nur während einer Motorbremsung des Nutzfahrzeugs erfüllt wird.

Insbesondere kann vorgesehen sein, dass das Schalten von Schadraum in Abhängigkeit von zumindest einer der folgenden Größen erfolgt:

- Motordrehzahl,
- Kompressordrehzahl,
- Gaspedalstellung,
- geförderter Luftstrom,
- Motorlast,
- Gangwahl,
- Luftbedarf des Nutzfahrzeugs,
- Temperatur des Kompressors.

Die während eines Kompressionszyklus des Kompressors entstehende wärme ist bei bekanntem Kompressionsgrad berechenbar. Daher kann aufgrund der Motordrehzahl, der Kompressordrehzahl, dem geförderten Luftstrom oder der Gaspedalstellung im Zusammenhang mit der Gangwahl die abzuführende Wärmemenge berechnet werden. Übersteigt die abzuführende Wärmemenge die durch das Kühlsystem des Kompressors abführbare Wärmemenge, so kann die abzuführende Wärmemenge durch das Zuschalten von Schadraum reduziert werden, indem die Kompression reduziert wird. Dabei kann auch die Motorlast sowie die momentane Temperatur des Kompressors berücksichtigt werden. Weiterhin kann der Luftbedarf des Nutzfahrzeugs als Kriterium zum Zuschalten von Schadraum herangezogen werden. Wenn das Nutzfahrzeug über ausreichend Druckluft verfügt, kann der Kompressor unabhängig von anderen Größen in einen energiesparenden Zustand überführt werden, um Kraftstoff zu sparen.

In diesem Zusammenhang ist bevorzugt, dass die Kompressordrehzahl direkt von einem Drehzahlsensor erfasst wird und dass die Kompressordrehzahl von dem Steuergerät bei dem Schalten der Ventileinrichtung berücksichtigt wird. Die direkte Erfassung der Kompressordrehzahl und die Berücksichtigung beim Schalten der Ventileinrichtung erlaubt eine Optimierung des Kompressorbetriebes.

Alternativ ist vorzugsweise vorgesehen, dass die Kompressordrehzahl indirekt über die Motordrehzahl und das Übersetzungsverhältnis erfasst wird und dass die Kompressordrehzahl von dem Steuergerät bei dem Schalten der Ventileinrichtung berücksichtigt wird. Die indirekte Erfassung der Kompressordrehzahl über die Motordrehzahl und die Übersetzung erlaubt eine Einsparung eines separaten Drehzahlsensors, wobei sonst keine Nachteile in kauf genommen werden müssen.

Die Erfindung wird nun mit Bezug auf die begleitenden Zeichnungen anhand besonders bevorzugter Ausführungsformen beispielhaft erläutert.

Es zeigen:

Figur 1      eine schematisch vereinfachte Darstellung eines Fahrzeugs mit einem Kompressor;

Figur 2 ein Schnittbild eines Kompressors;

Figur 3 den geförderten Luftstrom eines erfindungsgemäßen Kompressors in Abhängigkeit von der Motorbeziehungsweise Kompressordrehzahl;

Figur 4 ein Motorenkennfeld eines erfindungsgemäßen Kompressors zur Veranschaulichung der Arbeitsweise des Verfahrens und

Figur 5 ein Flussdiagramm an dem die einzelnen Verfahrensschritte erläutert werden.

In den nachfolgenden Zeichnungen bezeichnen gleiche Bezugszeichen gleiche oder gleichartige Teile.

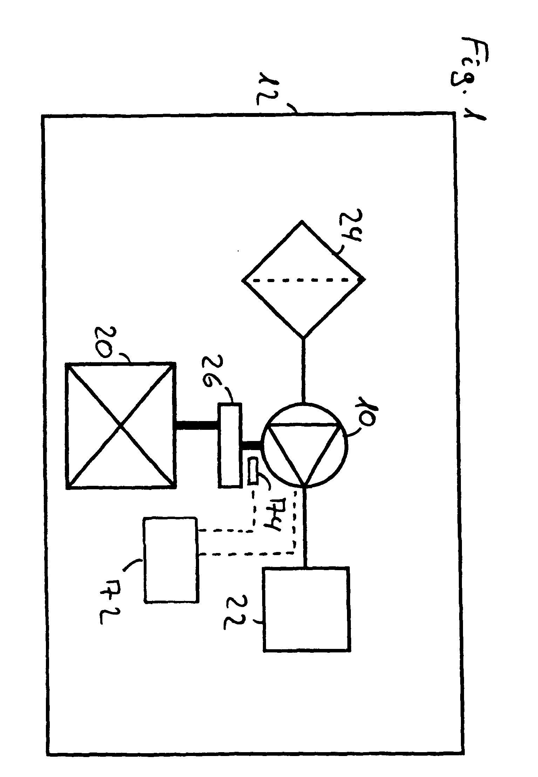

Figur 1 zeigt eine schematisch vereinfachte Darstellung eines Fahrzeugs 12 mit einem Kompressor 10. Das Nutzfahrzeug 12 wird von einem Antriebsmotor 20 angetrieben. Der Antriebsmotor 20 treibt über ein Getriebe 26 einen Kompressor 10 an, der Luft von einem Luftfilter 24 ansaugt und in komprimierter Form einer Druckluftaufbereitungsanlage 22 bereitstellt. Das Getriebe 26 besitzt ein Übersetzungsverhältnis $i$ kleiner als Eins, das heißt die Antriebsdrehzahl $n_{Antrieb}$, die mit der Motordrehzahl identisch sein kann, ist größer als die Abtriebsdrehzahl $n_{Abtrieb}$, die mit der Kompressordrehzahl identisch ist. Die Kompressordrehzahl ist also um den festen Faktor $i$ verschieden zur Motordrehzahl. Zusammen ergibt sich ein System aus dem Antriebsmotor 20, dem Getriebe 26 und dem Kompressor 10, der von dem Antriebsmotor 20 über das Getriebe 26 angetrieben ist. Typische Übersetzungsverhältnisse, bei der der Einsatz eines erfindungsgemäßen Kompressors besonders bevorzugt ist, liegen zwischen 0,4 und 0,7, wobei der erfindungsgemäße Kompressor auch bei anderen Übersetzungsverhältnissen einsetzbar ist. Weiterhin sind ein Drehzahlsensor 74 zur Erfassung der Kompressordrehzahl und ein Steuergerät 72 zur Steuerung des Kompressors 10 eingezeichnet.

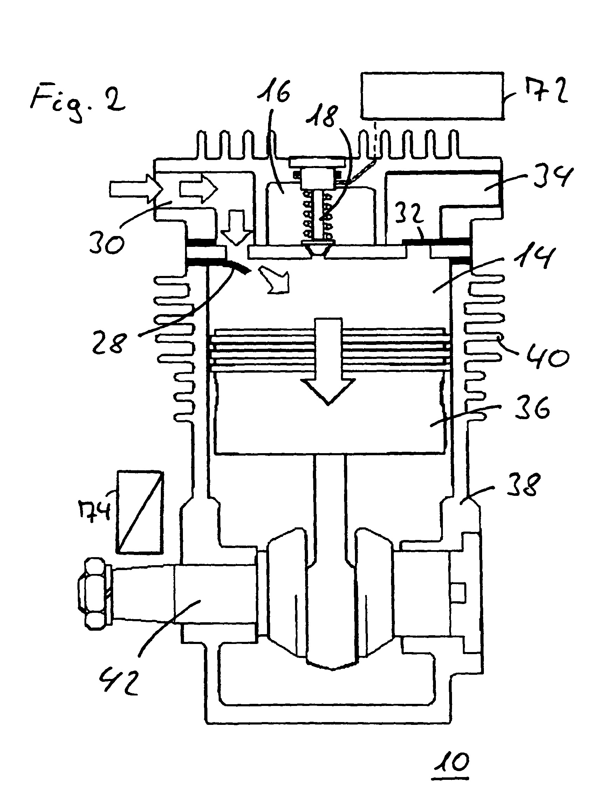

Figur 2 zeigt ein Schnittbild eines Kompressors 10. Der Kompressor 10 umfasst eine Zylindergehäuse 38 mit Kühlrippen 40, das einen sich in einem Kolbenraum 14 bewegenden Kolben 36 umschließt, der von einer Kurbelwelle 42 angetrieben wird. Die Kühlrippen 40 sind nicht zwingend notwendig, sorgen jedoch für eine Kühlung des Zylindergehäuses 38, wobei andere nicht dargestellte Arten der Kühlung des Zylindergehäuses 38, beispielsweise durch eine Wasserkühlung, oftmals eine höhere Kühlleistung aufweisen. Neben einer geringen Kühlleistung dienen die Kühlrippen 40 der Versteifung des Zylindergehäuses. Weiterhin sind ein Lufteinlass 30 mit einem Lufteinlassventil 28, ein Luftauslass 34 mit einem Luftauslassventil 32 sowie ein Schadraum 16 mit einer Ventileinrichtung 18 dargestellt. Die Ventileinrichtung 18 ist durch ein Steuergerät 72 ansteuerbar, wobei das Steuergerät 72 entweder separat oder als integrierter Bestandteil eines anderen bereits in dem Fahrzeug 12 angeordneten Steuergeräts, das beispielsweise die Druckluftaufbereitungsanlage 22 steuert, ausgeführt sein kann. Das Steuergerät 72 schaltet die Ventileinrichtung 18 auf Grundlage der Motor- beziehungsweise der Kompressordrehzahl, wobei zur Erfassung der jeweiligen Drehzahl entweder ein separater Sensor 74 vorgesehen ist, der direkt mit dem Steuergerät 72 gekoppelt ist, oder die Drehzahl über einen Fahrzeugbus, zum Beispiel den CAN-Bus, an das Steuergerät übertragen wird. In letzteren Fall werden zur Erfassung der Drehzahl bereits in dem Fahrzeug 12 vorhandene sonstige Sensoren verwendet.

Während einer dargestellten Luftansaugphase bewegt sich der Kolben 36 im Inneren des Kolbenraumes 14 nach unten, wobei Luft durch das Lufteinlassventil 28 von dem Lufteinlass 30 in den Kobenraum 14 eingesaugt wird. In der Ansaugphase ist das Luftauslassventil 32 konstruktionsbedingt geschlossen. Während der nicht dargestellten Förderphase bewegt sich der Kolben 36 in dem Kolbenraum 14 nach oben, wobei das Lufteinlassventil 28 schließt, das Luftauslassventil 32 bei Erreichen eines ausreichend hohen Druckes öffnet und Luft in den Luftauslass 34 gefördert wird.

Wenn die Ventileinrichtung 18 geschaltet wird, öffnet sich eine Verbindung zwischen dem Kolbenraum 14 und dem Schadraum 16, durch die Luft strömen kann. Der Strömungswiderstand ist dabei im Wesentlichen von der freigegebenen Ventilquerschnittsfläche abhängig, die die Ventileinrichtung 18 schaltet. Befindet sich der Kompressor 10 in einer Förderphase, wird die Luft nicht nur im Inneren des Kolbenraumes 14 sondern auch im Schadraum 16 komprimiert. Die relative Komprimierung der Luft wird also reduziert, da das zu komprimierende Volumen des Kolbenraumes um das des Schadraumes vergrößert wird, wenn die Ventileinrichtung 18 einen ausreichend großen Ventilquerschnitt freigibt. Ist der freigegebene Ventilquerschnitt nicht hinreichend groß, so wirkt er als Drossel. In diesem Fall wird der während der Komprimierung auftretende Druck weniger stark abgesenkt. Die Reduzierung der Komprimierung senkt die entstehende thermische Abwärme und damit die thermische Belastung des Kompressors.

Übersteigen das Volumen des Schadraumes 16 und der von der Ventileinrichtung 18 freigeschaltete Ventilquerschnitt eine bestimmte Grenze, so kann der während einer Förderphase im Kolbenraum 14 erreichbare Druck geringer sein als der im Bereich des Luftauslasses 34 herrschende Druck. Eine Luftförderung findet dann nicht mehr statt, wobei gleichzeitig weniger Arbeit zur Komprimierung der Luft verrichtet werden muss. Auf diese Weise ist ein Energiesparsystem für den Kompressor 10 realisierbar.

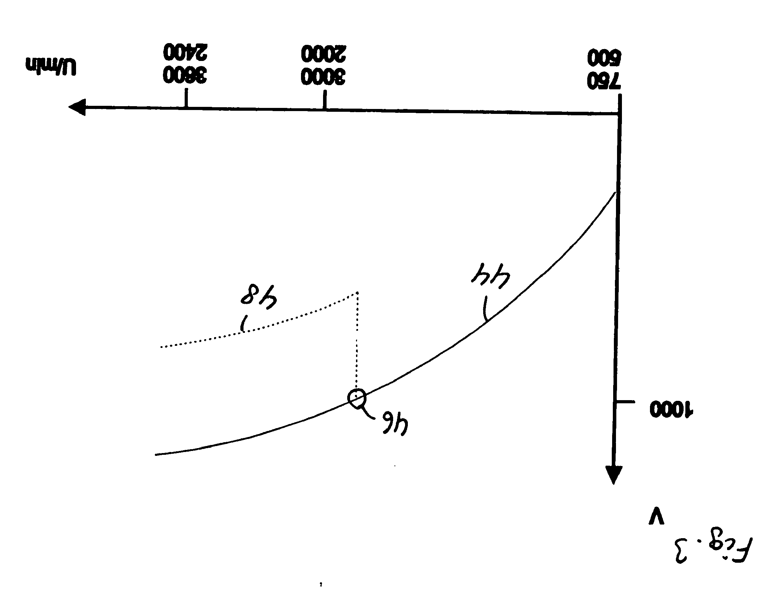

Figur 3 zeigt den geförderten Luftstrom eines erfindungsgemäßen Kompressors in Abhängigkeit der Motor- beziehungsweise Kompressordrehzahl. Auf der x-Achse aufgetragen ist die jeweilige Motor- beziehungsweise Kompressordrehzahl, wobei die jeweils kleinere Zahl der Motordrehzahl und die jeweils größere Zahl der Kompressordrehzahl entspricht. Auf der y-Achse aufgetragen ist der geförderte Luftstrom. Dargestellt ist eine erste Förderkurve 44, die ausgehend von der Leerlaufdrehzahl des Antriebsmotors von 500 Umdrehungen pro Minute beziehungsweise der zugehörigen Kompressordrehzahl von 750 Umdrehungen pro Minute, was einem Übersetzungsverhältnis des Getriebes von Zwei Drittel entspricht, anwächst. Bei einem Zuschaltpunkt 46 der unterhalb der Nenndrehzahl des Antriebsmotors von 2000 Umdrehungen pro Minute liegt, wird ein Schadraum zugeschaltet. In Folge dessen sinkt der geförderte Luftstrom ab, wobei der geförderte Luftstrom nun anhand einer zweiten Förderkurve 48 bestimmbar ist. Steigt die Motordrehzahl über die Nenndrehzahl des Antriebsmotors von 2000 Umdrehungen pro Minute an, beispielsweise bei Einleitung einer Motorbremsung, wobei eine Bremsdrehzahl von 2400 Umdrehungen pro Minute erreicht wird, so wächst der geförderte Luftstrom gemäß der zweiten Förderkurve 48 an, die unterhalb der ersten Förderkurve 44 verläuft. Die zweite Förderkurve 48 geht einher mit einer reduzierten Komprimierung der Luft durch den zugeschalteten Schadraum, weshalb die abzuführende Komprimierungswärme bei zugeschaltetem Schadraum reduziert ist. Eine mehrstufige Absenkung ist ebenfalls denkbar.

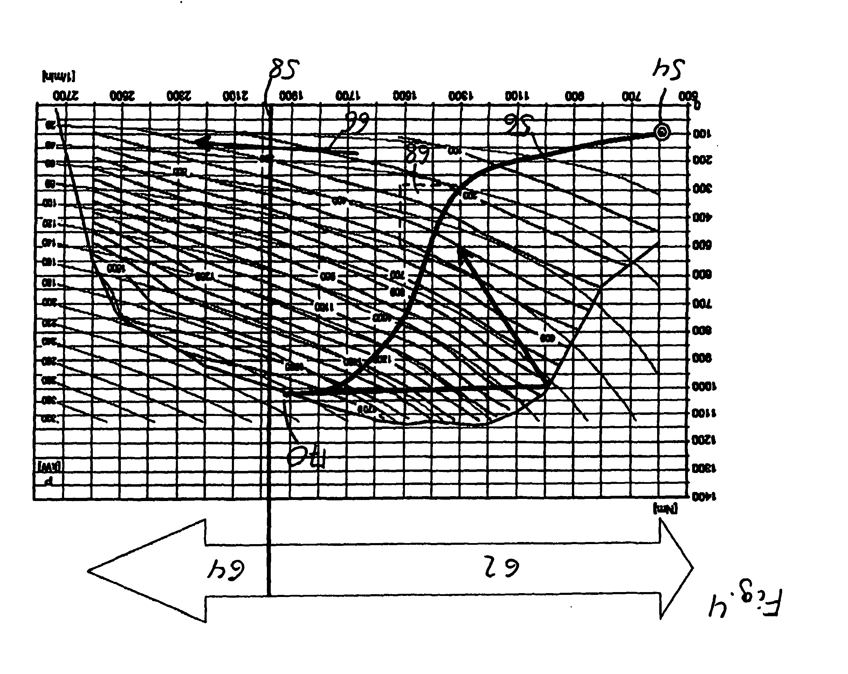

Figur 4 zeigt ein Motorenkennfeld eines erfindungsgemäßen Kompressors zur Veranschaulichung der Arbeitsweise des Verfahrens. Aufgetragen sind in üblicher Weise auf der x-Achse die Motordrehzahl, auf der y-Achse das von dem Antriebsmotor geleistete Drehmoment und zusätzlich von rechts ausgehend in Form von Hyperbeln Linien gleicher Motorleistung. Weiterhin sind im Innern des Motorenkennfeldes Linien gleichen Ladedrucks in Millibar aufgetragen, die den Ladedruck eines Turboladers des Antriebsmotors 20 angeben. Ein erster Betriebsbereich 62 und ein zweiter Betriebsbereich 64 werden von einer Schaltgrenze 58 getrennt. Die fett eingezeichnete Linie 56 stellt eine gemessene Kurve von Motordaten dar, anhand derer im Folgenden das Verfahren erläutert wird.

In dem ersten Betriebsbereich 62 des Kompressors 10 ist kein Schadraum 16 zugeschaltet. In dem zweiten Betriebsbereich 64 ist Schadraum 16 durch die Ventileinrichtung 18 zugeschaltet. Ausgehend vom Leerlauf 54 im ersten Betriebsbereich 62 beschleunigt das Fahrzeug, wobei sich der Zustand des Antriebsmotors 20 von links unten nach rechts oben entlang der s-förmigen Kurve 56 durch das Motorenkennfeld bewegt. Bei Erreichen eines oberen Schaltpunktes 70 wird der nächst höhere Gang eines nicht dargestellten Getriebes eingelegt, wobei gleichzeitig die Motordrehzahl des Antriebsmotors 20 steil abfällt. Nach dem Wiedereinkuppeln des Getriebes steigt die Motordrehzahl wieder bis Punkt 70 an. Zu beachten ist, dass die Schaltgrenze 58 so gewählt wurde, dass sie während des normalen Betriebs des Antriebsmotors 20 des Nutzfahrzeugs 12 nicht überquert wird. Bei Erreichen der Endgeschwindigkeit des Nutzfahrzeugs 12 befindet sich der Antriebsmotor 20 üblicherweise innerhalb des normalen Betriebsbereichs 68, der von der Schaltgrenze 58 entfernt liegt. Wird nun eine Motorbremsung eingeleitet, so bewegt sich der Zustand des Antriebsmotors entlang der einer Motorbremsung zugehörigen Kurve 66 über die Nenndrehzahl des Antriebsmotors 20 von 2000 Umdrehungen pro Minute hinaus. Hierbei wird die Schaltgrenze 58 gekreuzt und die Ventileinrichtung 18 schaltet Schadraum 16 zu, wodurch die in dem Kompressor 10 auftretende maximale Kompressionsrate reduziert wird, was eine Absenkung des geförderten Luftstroms und der entstehenden thermischen Abwärme zur Folge hat. Wird die Motorbremsung beendet, so überquert der Zustand der Antriebsmotors 20 wiederum die Schaltgrenze 58 und die Ventileinrichtung 18 schaltet den zuvor zugeschalteten Schadraum 16 wieder weg. Der Zustand des Antriebsmotors 20 bewegt sich nun wieder entlang der s-förmigen Kurve 56. Es ist weiterhin denkbar den Kompressor 10 durch Zuschalten von weiterem Schadraum beziehungsweise das Vergrößern des freien Ventilquerschnitts in einen energiesparenden Zustand zu versetzten, bei dem die geförderte Luftmenge gegen Null geht.

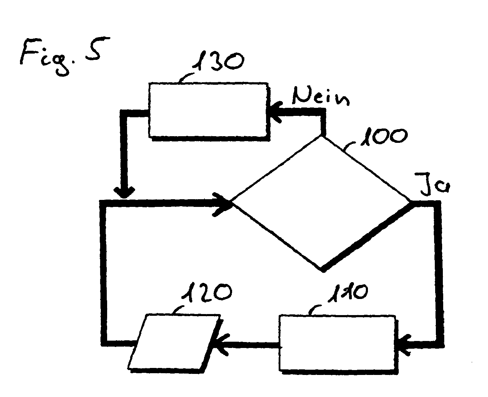

Figur 5 zeigt ein Flussdiagramm an dem die einzelnen Verfahrensschritte erläutert werden. Ausgehend von Schritt 100 wird überprüft, ob die von den Kompressor 10 geförderte Luftmenge größer als eine maximale Luftmenge $V_{max}$ ist. Dies kann beispielsweise durch Überwachung der Motordrehzahl des Antriebsmotors 20, der Kompressordrehzahl über Drehzahlsensoren, die direkt oder indirekt über einen Fahrzeugbus, zum Beispiel den CAN-Bus, mit der zugehörigen Steuerung gekoppelt sind, oder der Gaspedalstellung in Zusammenhang mit der Gangwahl erfolgen. Eine direkte Überwachung der Temperatur des Kompressors 10 ist ebenfalls denkbar. Weiterhin kann die Motorlast des Antriebsmotors 20 berücksichtigt werden, insbesondere falls eine zusätzliche Aufladung des Kompressors 10 durch einen Turbolader vorgesehen ist. Ist der von dem Kompressor 10 geförderte Luftstrom größer als $V_{max}$, 100-ja, so wird bei 110 Schadraum 16 von der Ventileinrichtung 18 zugeschaltet. Anschließend wird bei 120 das Zuschalten von Schadraum zur späteren Diagnose oder statistischen Auswertung gespeichert. Im Folgenden wird wieder bei 100 fortgefahren. Ist die von dem Kompressor 10 geförderte Luftmenge geringer als $V_{max}$, 100-nein, wird bei 130 fortgefahren.

Die Ventileinrichtung 18 schaltet den Schadraum 16 weg, um die Luftförderung des Kompressors 10 wieder zu erhöhen. Anschließend wird bei 100 fortgefahren. Zu beachten ist, dass bei 100 nicht die real geförderte Luftmenge des Kompressors 10 zu bestimmen ist, sondern vielmehr die Luftmenge, die der Kompressor 10 fördern würde, wenn der Schadraum 16 nicht zugeschaltet ist. Weiterhin ist anzumerken, dass das Einschalten des Kompressors auch bei einem niedrigeren als dem üblichen Einschaltdruck erfolgen kann. Der Einschaltdruck muss jedoch immer oberhalb des gesetzlich vorgeschriebenen Mindestdrucks liegen. Dadurch wird der Schutz des Kompressors gegenüber mechanischer Überbeanspruchung bei hohen Drehzahlen weiter verbessert, weil es weniger oft zur Betätigung des Kompressors bei hohen Drehzahlen kommt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

**Bezugszeichenliste**

| | |
|---|---|
| 10 | Kompressor |
| 12 | Nutzfahrzeug |
| 14 | Kolbenraum |
| 16 | Schadraum |
| 18 | Ventileinrichtung |
| 20 | Antriebsmotor |
| 22 | Druckluftaufbereitungsanlage |
| 24 | Luftfilter |
| 26 | Getriebe |
| 28 | Lufteinlassventil |
| 30 | Lufteinlass |
| 32 | Luftauslassventil |
| 34 | Luftauslass |
| 36 | Kolben |
| 38 | Zylindergehäuse |
| 40 | Kühlrippe |
| 42 | Kurbelwelle |
| 44 | erste Förderkurve |
| 46 | Zuschaltpunkt |
| 48 | zweite Förderkurve |
| 54 | Leerlauf |
| 56 | gemessene Kurve |
| 58 | Schaltgrenze |
| 62 | erster Betriebsbereich |
| 64 | zweiter Betriebsbereich |
| 66 | Motorbremsung |
| 68 | normaler Betriebsbereich |
| 70 | Schaltpunkt |
| 72 | Steuergerät |
| 74 | Drehzahlsensor |
| 100 | geförderter Luftstrom größer als $V_{max}$ |
| 110 | Schadraum zuschalten |
| 120 | Daten speichern |
| 130 | Schadraum wegschalten |

**Patentansprüche**

1. Kompressor (10) zur Druckluftversorgung eines Nutzfahrzeugs (12) mit einem Antriebsmotor (20), wobei der Kompressor (10) einen Kolbenraum (14), einen Schadraum (16) sowie eine Ventileinrichtung (18) zum Schalten des Schadraumes (16) umfasst, **dadurch gekennzeichnet,**

- **dass** der Kompressor (10) über ein Getriebe (26) mit einem Übersetzungsverhältnis kleiner als Eins von dem Antriebsmotor (20) angetrieben ist, und
- **dass** die Ventileinrichtung (18) in der Weise ausgebildet ist, dass, durch Zuschalten von Schadraum (16), der von dem Kompressor (10) geförderte Luftstrom auf einen von Null verschiedenen Wert reduzierbar ist.

2. Kompressor (10) nach Anspruch 1, **dadurch gekennzeichnet, dass** die Ventileinrichtung (18) mehrere einzeln schaltbare Ventile umfasst.

3. Kompressor (10) nach Anspruch 2, **dadurch gekennzeichnet, dass** der Schadraum (16) mehrere separate Volumen umfasst, die von der Ventileinrichtung (18) einzeln schaltbar sind.

4. Kompressor (10) nach Anspruch 1, **dadurch gekennzeichnet, dass** die Ventileinrichtung (18) ein zumindest zweistufig schaltbares Ventil umfasst.

5. Kompressor (10) nach einem der vorhergehenden Ansprüche, **dadurch gekennzeichnet, dass** der von dem Kompressor (10) geförderte Luftstrom durch Zuschalten von Schadraum (16) auf Null reduzierbar ist.

6. Nutzfahrzeug (12) mit einem Kompressor (10) nach einem der vorhergehenden Ansprüche.

7. Verfahren zur Steuerung eines Kompressors (10) zur Druckluftversorgung eines Nutzfahrzeugs (12) mit einem Antriebsmotor (20), wobei der Kompressor (10) einen Kolbenraum (14), einen Schadraum (16) sowie eine Ventileinrichtung (18) zum Schalten des Schadraumes (16) umfasst, **dadurch gekennzeichnet,**

- **dass** der Kompressor (10) über ein Getriebe (26) mit einem Übersetzungsverhältnis kleiner als Eins von dem Antriebsmotor (20) angetrieben wird, und
- **dass**, durch Zuschalten von Schadraum (16), der von dem Kompressor (10) geförderte Luftstrom auf einen von Null verschiedenen Wert reduziert wird.

8. Verfahren nach Anspruch 7, **dadurch gekennzeichnet, dass** der geförderte Luftstrom durch Veränderung eines insgesamt offenen Ventilquerschnitts der Ventileinrichtung (18) zwischen dem Schadraum (16) und dem Kolbenraum (14) beeinflusst wird.

9. Verfahren nach Anspruch 7 oder 8, **dadurch gekennzeichnet, dass** der von dem Kompressor (10) geförderte Luftstrom durch Zuschalten von Schadraum (16) auf Null reduziert wird.

10. Verfahren nach einem der Ansprüche 7 bis 9, **dadurch gekennzeichnet, dass** zumindest eine Bedingung zum Schalten von Schadraum (16) nur während einer Motorbremsung des Nutzfahrzeugs (12) erfüllt wird.

11. Verfahren nach einem der Ansprüche 7 bis 10, **dadurch gekennzeichnet, dass** das Schalten von Schadraum (16) in Abhängigkeit von zumindest einer der folgenden Größen erfolgt:

     - Motordrehzahl,
     - Kompressordrehzahl,
     - Gaspedalstellung,
     - geförderter Luftstrom,
     - Motorlast,
     - Gangwahl,
     - Luftbedarf des Nutzfahrzeugs,
     - Temperatur des Kompressors.

12. Verfahren nach einem der Ansprüche 7 bis 11, **dadurch gekennzeichnet,**

     - **dass** die Kompressordrehzahl direkt von einem Drehzahlsensor (74) erfasst wird und
     - **dass** die Kompressordrehzahl von dem Steuergerät (72) bei dem Schalten der Ventileinrichtung (18) berücksichtigt wird.

13. Verfahren nach einem der Ansprüche 7 bis 11, **dadurch gekennzeichnet,**

     - **dass** die Kompressordrehzahl indirekt über die Motordrehzahl und das Übersetzungsverhältnis erfasst wird und
     - **dass** die Kompressordrehzahl von dem Steuergerät (72) bei dem Schalten der Ventileinrichtung (18) berücksichtigt wird.

**Claims**

1. Compressor (10) for compressed-air supply of a commercial vehicle (12) comprising a driving engine (20), with the compressor (10) being provided with a piston chamber (14), a cylinder clearance space (16) as well as a valve means (18) for switching said cylinder clearance space (16), **characterised in**

     - **that** said compressor (10) is driven by said driving engine (20) via a gearing (26) at a transmission ratio smaller than one, and
     - **that** said valve means (18) is configured in a manner that the air stream delivered by the compressor (10) is reducible to a value other than zero by the additional connection of cylinder clearance space (16).

2. Compressor (10) according to Claim 1, **characterised in that** said valve means (18) includes a plurality of valves adapted to be switched separately.

3. Compressor (10) according to Claim 2, **characterised in that** said cylinder clearance space (16) includes a plurality of separate volumes that are adapted to be switched separately by said valve means (18).

4. Compressor (10) according to Claim 1, **characterised in that** said valve means (18) includes a valve adapted to be switched at least in two stages.

5. Compressor (10) according to any of the preceding Claim, **characterised in that** the air stream delivered by the compressor (10) is reducible to zero by the additional connection of cylinder clearance space (16).

6. Commercial vehicle (12) comprising a compressor (10) according to any of the preceding Claims.

7. Method of controlling a compressor (10) for compressed-air supply of a commercial vehicle (12) comprising a driving engine (20), with the compressor (10) being provided with a piston chamber (14), a cylinder clearance space (16) as well as a valve means (18) for switching said cylinder clearance space (16), **characterised in**

     - **that** said compressor (10) is driven by said driving engine (20) via a gearing (26) at a transmission ratio smaller than one, and
     - **that** the air stream delivered by the compressor (10) is reducible to a value other than zero by the additional connection of cylinder clearance space (16).

8. Method according to Claim 7, **characterised in that** the delivered air stream is influenced by the variation of a valve cross-sectional area of said valve means (18), which is open on the whole, between said cylinder clearance space (16) and said piston chamber (14).

9. Method according to Claim 7 or 8, **characterised in that** the air stream delivered by the compressor (10) is reduced to zero by the connection of additional cylinder clearance space (16).

**10.** Method according to any of the Claim 7 to 9, **characterised in that** at least one condition for switching the cylinder clearing space (16) is satisfied only during an engine braking operation of the commercial vehicle (12).

**11.** Method according to any of the Claims 7 to 10, **characterised in that** the switching of cylinder clearance space (16) takes place as a function of at least one of the following parameters:

- engine speed,
- compressor speed
- accelerator pedal position,
- delivered air stream,
- engine load,
- gear selection,
- air demand of the commercial vehicle,
- temperature of the compressor.

**12.** Method according to any of the Claims 7 to 11, **characterised in**

- **that** the compressor speed is detected directly by a speed sensor (74), and
- **that** the controller device (72) takes the compressor speed into consideration when said valve means (18) is switched.

**13.** Method according to any of the Claims 7 to 11, **characterised in**

- **that** the compressor speed is detected indirectly via the engine speed and the transmission ratio, and
- **that** the controller device (72) takes the compressor speed into consideration when said valve means (18) is switched.

**Revendications**

**1.** Compresseur (10) pour l'alimentation en air comprimé d'un véhicule (12) utilitaire ayant un moteur (20) d'entraînement, le compresseur (10) comprenant un espace (14) de piston, un espace (16) de nuisance, ainsi qu'un dispositif (18) de vanne pour la mise en circuit de l'espace (16) de nuisance, **caractérisé**

- **en ce que** le compresseur (10) est entraîné par le moteur (20) d'entraînement par l'intermédiaire d'une transmission (26) ayant un rapport de multiplication plus petit que un, et
- **en ce que** le dispositif (18) de vanne est constitué de manière à ce que, par mise en circuit de l'espace (16) de nuisance, le courant d'air véhiculé par le compresseur (10) peut être réduit à une valeur différente de zéro.

**2.** Compresseur (10) suivant la revendication 1, **caractérisé en ce que** le dispositif (18) de vanne a plusieurs vannes individuelles pouvant être commutées.

**3.** Compresseur (10) suivant la revendication 2, **caractérisé en ce que** l'espace (16) de nuisance comprend plusieurs volumes distincts, qui peuvent être mis en circuit individuellement par le dispositif (18) de vanne.

**4.** Compresseur (10) suivant la revendication 1, **caractérisé en ce que** le dispositif (18) de vanne comprend une vanne pouvant être mise en circuit en au moins deux paliers.

**5.** Compresseur (10) suivant l'une des revendications précédentes, **caractérisé en ce que** le courant d'air véhiculé par le compresseur (10) peut être réduit à zéro par mise en circuit de l'espace (16) de nuisance.

**6.** Véhicule (12) utilitaire ayant un compresseur suivant l'une des revendications précédentes.

**7.** Procédé de commande d'un compresseur (10) pour l'alimentation en air comprimé d'un véhicule (12) utilitaire ayant un moteur (20) d'entraînement, le compresseur (10) comprenant un espace (14) de piston, un espace (16) de nuisance, ainsi qu'un dispositif (18) à vanne pour la mise en circuit de l'espace (16) de nuisance, **caractérisé**

- **en ce que** l'on entraîne le compresseur (10) par le moteur (20) d'entraînement par l'intermédiaire d'une transmission (26) ayant un rapport de multiplication plus petit que un, et
- **en ce que**, par mise en circuit de l'espace (16) de nuisance, on réduit le courant d'air véhiculé par le compresseur (10) à une valeur différente de zéro.

**8.** Procédé suivant la revendication 7, **caractérisé en ce que** l'on influence le courant d'air véhiculé en modifiant une section transversale de vanne, dans l'ensemble ouverte, du dispositif (18) à vanne entre l'espace (16) de nuisance et l'espace (14) de piston.

**9.** Procédé suivant la revendication 7 ou 8, **caractérisé en ce que** l'on réduit à zéro le courant d'air véhiculé par le compresseur (10) par mise en circuit de l'espace (16) de nuisance.

**10.** Procédé suivant l'une des revendications 7 à 9, **caractérisé en ce qu'**au moins une condition de mise en circuit de l'espace (16) de nuisance n'est satisfaite que pendant un freinage moteur du véhicule (12) utilitaire.

**11.** Procédé suivant l'une des revendications 7 à 10, **caractérisé en ce que** la mise en circuit de l'espace (16) de nuisance s'effectue en fonction d'au moins l'une des grandeurs suivantes :

- vitesse de rotation du compresseur,
- position de la pédale des gaz,
- courant d'air véhiculé,
- charge du moteur,
- choix des vitesses,
- besoin en air du véhicule utilitaire,
- température du compresseur.

**12.** Procédé suivant l'une des revendications 7 à 10, **caractérisé**

- **en ce que** l'on détecte la vitesse de rotation du compresseur directement par un capteur (74) de vitesse de rotation et
- **en ce que** la vitesse de rotation du compresseur est prise en compte par l'appareil (72) de commande lors de la commutation du dispositif (18) de vanne.

**13.** Procédé suivant l'une des revendications 7 à 10, **caractérisé**

- **en ce que** l'on détecte la vitesse de rotation du compresseur indirectement par le régime du moteur et par le rapport de multiplication et
- **en ce que** la vitesse de rotation du compresseur est prise en compte par l'appareil (72) de commande lors de la commutation du dispositif (18) de vanne.

Fig. 1

Fig. 2

Fig. 3

Fig.4

EP 2 234 856 B1

Fig. 5

14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0119505 A1
- EP 0254524 A

- EP 1442903 A1